# EUROPEAN PATENT APPLICATION

(11) **EP 2 357 573 A1**
(43) Date of publication of application: **17.08.2011**
(21) Application number: 09825773.6
(22) Date of filing: 13.11.2009
(51) Int. Cl.: G06F 17/30

(54) **METHOD AND APPARATUS FOR SHOWING WEB PAGE-RELATED RESOURCES**

(30) Priority: 14.11.2008 CN 200810226378
(71) Applicant: Beijing Sogou Technology Development Co., Ltd., Beijing 100084 (CN)
(72) Inventor: WAN, Yong, Beijing 100084 (CN)
(74) Representative: Detken, Andreas
(86) International application number: PCT/CN2009/074932
(87) International publication number: WO 2010/054598

(57) **Abstract**

A method for showing web page-related resources is provided. The method comprises: specific resource related to the web page are identified; the identified specific resources are showed in a separate window modes (S102). An apparatus for showing web page-related resources is still provided.

## Description

This application claims the priority of Chinese patent application no. 200810226378.8, filed in the Chinese Patent Office on November 14, 2008, titled "Web Page Resource Presenting Method and Apparatus," the entire contents of which are incorporated herein by reference.

### Technology Field

The present invention relates to the field of browser technology and, more particularly, relates to a web page resource presenting method and apparatus.

### Background

With development in the multi-media technologies, resources related to web pages can now include texts, pictures, audios, animations, and videos, etc. By appropriately combining and presenting these resources, various web pages containing a variety of types of information may be displayed to users.

However, with current technologies, when presenting a resource related to a web page, the resource is often directly displayed at a fixed location in the web page with the resource. For example, when a user needs to watch a video from a web page, the video usually is directly played to the user from the web page at a location where the video is embedded. Such display format displays the resource to be displayed as a resource embedded in the web page, and may only allow the user to carry out very limited operations, such as pause, play, and maximize. The user may be unable to perform other personal operations according to the user's own interests. Also for example, certain audio resources may be used as web page background music, and usually there is no audio player in the web page. Thus, the user cannot see the background music, and certainly cannot perform independent operations on the background music.

### Contents of Invention

Embodiments of the present invention provide a web page resource presenting method and apparatus to provide a good technical foundation for users to perform more operations independently on presenting resources related to web pages.

To achieve this objective, the present invention provides the following aspects:

A method for presenting web page resources, comprising:
identifying a specific resource related to a web page;
presenting the identified specific resource in an independent window.

Preferably, presenting the identified specific resource further includes:
creating the independent window; and
presenting the identified specific resource in the created independent window.

Preferably, presenting the identified specific resource in the created independent window further includes:
modifying a parent window of the web page containing the identified specific resource into the independent window, and presenting the identified specific resource in the independent window;
   or,
when the identified specific resource is of a window type, modifying a parent window of the specific resource window into the independent window, and presenting the identified specific resource in the independent window;
   or,
creating a temporary browser navigation page with the independent window as a parent window, reloading the web page containing the identified specific resource, and presenting the identified web page resource in the independent window.

Preferably, modifying the parent window of the web page containing the identified specific resource into the independent window and presenting the identified specific resource in the independent window further include:
modifying the parent window of the web page containing the identified specific resource into the independent window; adjusting relative positions and/or sizes of the web page and the independent window; and presenting the identified specific resource in the independent window.

Preferably, creating the temporary browser navigation page with the independent window as the parent window, reloading the web page containing the identified specific resource, and presenting the identified web page resource in the independent window further include:
creating the temporary browser navigation page with the independent window as the parent window, reloading the web page containing the identified specific resource according to a URL of the web page, adjusting relative positions and/or sizes of the temporary browser navigation page and the independent window, and presenting the identified specific resource in the independent window.

Preferably, the independent window is a desktop window and modifying the parent window of the web page containing the identified specific resource into the independent window and presenting the identified specific resource in the independent window further include:
re-organizing the web page by hiding contents other than the specific resource in the web page, modifying the parent window of the reorganized web page into the desktop window, and presenting the identified specific resource in the independent window.

Preferably, presenting the identified specific resource in the independent window further includes:
starting a known player, downloading the identified specific resource using the known player, and presenting the identified specific resource.

Preferably,
providing a page restore entry interface and, when a page restore request is received by the page restore entry interface, restoring the presentation of the identified specific resource in the independent window back to an original presentation in the web page.

Preferably, identifying the specific resource related to the web page further includes:
identifying the specific resource in the web page;
   and/or,
identifying the specific resource in a sub-page of the web page;
   and/or,
identifying the specific resource back-end transferred in the web page;
   and/or,
identifying the specific resource in another web page pointed to by a hyperlink in the web page;
   and/or,
identifying the specific resource in web pages having the same theme as the web page.

Preferably, the specific resource related to the web page is identified by an application program running on client side.

Preferably, the application program running on client side is a browser or a module used by the browser.

Preferably, the independent window includes: a desktop window, or, a window with the desktop window as a parent window, or, a dialog-box type window.

Preferably,
displaying a prompt in a window of the web page containing the specific resource to indicate the specific resource contained in the web page.

Preferably, the prompt includes a resource presenting entry, and presenting the specific resource in the independent window further includes:
when receiving a user request for presenting the specific resource from the resource presenting entry, presenting the identified and user-requested specific resource in the independent window.
Preferably,
providing a resource presenting entry to a user,
wherein presenting the specific resource in the independent window further includes:
   when receiving a user request from the resource presenting entry for presenting the specific resource, presenting the identified and user-requested specific resource in the independent window.

Preferably,
presetting an active display rule,
wherein presenting the specific resource in the independent window further includes:
when the preset active display rule is satisfied, automatically presenting the identified specific resource in the independent window.

Preferably,
adjusting a position and/or size of the independent window.

Preferably,
setting-top the independent window presenting the specific resource at a user display level.

Preferably, the specific resource includes a single-media resource and/or a multi-media resource.

Preferably, the specific resource includes any one or more of a video resource, an audio resource, an image resource, an animation resource, and a text resource.

Preferably,
when the specific resource is a video or audio resource, the presenting is playing;
when the specific resource is an image resource, an animation resource, or a text resource, the presenting is displaying.

Preferably, content presented in the independent window is limited to the specific resource itself.

Preferably,
controlling a progress of the independent window presenting the specific resource to be synchronized with a progress of the web page.

Preferably, the specific resource presented in the independent window includes audio, and the method further includes:
controlling the specific resource in the web page so as to mute or pause the specific resource.

Preferably, the specific resource is an image resource, and presenting the identified specific resource in the independent window further includes:
presenting all image resources in other web pages having a same theme as the web page in the independent window.

Preferably, identifying the specific resource related to the web page further includes:
intercepting a request sent to a server requesting downloading the specific resource and/or a response returned from the server, the request including uniform resource location information of the specific resource;
identifying the specific resource related to the web page based on the uniform resource location information in the request and/or a data portion of the response.

Preferably, identifying the specific resource related to the web page further includes:
identifying a type of the specific resource related to the web page, and/or, identifying uniform resource location information of the specific resource related to the web page.

A web page resource presenting apparatus, comprising:
an identification unit, which is used to identify a specific resource related to a web page;
an independent presenting unit, which is used to present the identified specific resource in an independent window.

Preferably, the independent presenting unit includes:
a creation unit, which is used to create the independent window;
a presentation processing unit, which is used to present the identified specific resource in the created independent window.

Preferably, the presentation processing unit further includes:
a first parent window change unit, which is used to modify a parent window of the web page containing the identified specific resource into the independent window, and to present the identified specific resource in the independent window;
   or,
a second parent window change unit, which is used to, when the identified specific resource is of a window type, modify a parent window of the specific resource window into the independent window, and present the identified specific resource in the independent window;
   or,
a reload sub-unit, which is used to create a temporary browser navigation page with the independent window as a parent window, to reload the web page containing the identified specific resource, and to present the identified web page resource in the independent window.

Preferably, the first parent window change unit is further used to: modify the parent window of the web page containing the identified specific resource into the independent window; adjust relative positions and/or sizes of the web page and the independent window; and present the identified specific resource in the independent window.

Preferably, the reload unit is further used to: create the temporary browser navigation page with the independent window as the parent window, reload the web page containing the identified specific resource according to a URL of the web page, adjust relative positions and/or sizes of the temporary browser navigation page and the independent window, and present the identified specific resource in the independent window.

Preferably, the independent window is a desktop window and the first parent window change unit is further used to: re-organize the web page by hiding contents other than the specific resource in the web page, modify a parent window of the reorganized web page into the desktop window, and present the identified specific resource in the independent window.

Preferably, the independent presenting unit is further used to: start a known player, download the identified specific resource using the known player, and present the identified specific resource.

Preferably,
a page restore unit, which is used to receive a user request for restoring the web page and, when receiving the user restore request, to trigger the independent presenting unit to restore the presentation of the identified specific resource in the independent window back to an original presentation in the web page.

Preferably, the identification unit further includes:
a first identification sub-unit, which is used to identify the specific resource in the web page;
   and/or,
a second identification sub-unit, which is used to identify the specific resource in a sub-page of the web page;
   and/or,
a third identification sub-unit, which is used to identify the specific resource back-end transferred in the web page;
   and/or,
a fourth identification sub-unit, which is used to identify the specific resource in another web page pointed to by a hyperlink in the web page;
   and/or,
a fifth identification sub-unit, which is used to identify the specific resource in web pages having the same theme as the web page.

Preferably, the identification unit is an application program running on client side.

Preferably, the application program running on client side is a browser or a module used by the browser.

Preferably, the independent window includes: a desktop window, or, a window with the desktop window as a parent window, or, a dialog-box type window.

Preferably,
a prompt unit, which is used to display a prompt in a window of the web page containing the specific resource to indicate the specific resource contained in the web page.

Preferably, the prompt:
includes a resource presenting entry and is used to receive a user request for presenting the specific resource; and
after receiving the user request, triggers the independent presenting unit to present the identified and user-requested specific resource in the independent window.

Preferably,
an independent presenting entry unit, which is used to receive a user request for presenting the specific resource and, after receiving the user request, to trigger the independent presenting unit to present the identified and user-requested specific resource in the independent window.

Preferably,
a display rule decision unit, which is used to determine whether a preset active display rule is satisfied and, when the preset active display rule is satisfied, to trigger the independent presenting unit to present the identified specific resource in the independent window.

Preferably,
an adjusting unit, which is used to adjust a position and/or size of the independent window.

Preferably,
a set-top unit, which is used to set-top the independent window presenting the specific resource at a user display level.

Preferably, the specific resource includes a single-media resource and/or a multi-media resource.

Preferably, the specific resource includes any one or more of a video resource, an audio resource, an image resource, an animation resource, and a text resource.

Preferably, the independent presenting unit further includes:
a play sub-unit, which is used to play a video or audio resource in the independent window;
a display sub-unit, which is used to display an image resource, an animation resource, or a text resource in the independent window.

Preferably, the independent presenting unit presents content limited to the specific resource itself.

Preferably,
a first control unit, which is used to control a progress of the independent window presenting the specific resource to be synchronized with a progress of the web page.

Preferably,
a second control unit, which is used to, when the specific resource presented in the independent window includes audio, control the specific resource in the web page so as to mute or pause the specific resource.

Preferably, the specific resource is an image resource, and the independent presenting unit is used to present all image resources in other web pages having a same theme as the web page in the independent window.

Preferably, the identification unit further includes:
an intercepting sub-unit, which is used to intercept a request sent to a server requesting downloading the specific resource and/or a response returned from the server, the request including uniform resource location information of the specific resource;
a determining sub-unit, which is used to identify the specific resource related to the web page based on the uniform resource location information in the request and/or a data portion of the response.

Preferably, the identification unit is used to identify a type of the specific resource related to the web page, and/or, to identify uniform resource location information of the specific resource related to the web page.

Preferably, the apparatus is a browser.

A computer-readable medium including computer program instructions, when the computer program instructions being executed by a computer unit, instructing the computer unit to:
identify a specific resource related to a web page;
present the identified specific resource in an independent window.

A web page resource presenting method, comprising:
identifying a specific resource related to a web page;
presenting the identified specific resource in a child window with a browser as a parent window.

Preferably, presenting the identified specific resource further includes:
creating the child window with the browser as the parent window;
obtaining uniform resource location information of the specific resource related to the web page; downloading the specific resource based on the uniform resource location information; and presenting the downloaded specific resource in the child window.

Preferably, the specific resource includes any one or more of a video resource, an audio resource, an image resource, an animation resource, and a text resource.

A web page resource presenting apparatus, comprising:
an identification unit, which is used to identify a specific resource related to a web page;
a presenting unit, which is used to present the identified specific resource in a child window with a browser as a parent window.

Preferably, the presenting unit further includes:
a creation sub-unit, which is used to create the child window with the browser as the parent window;
a download sub-unit, which is used to obtain uniform resource location information of the specific resource related to the web page and to download the specific resource based on the uniform resource location information;
a realization sub-unit, which is used to present the downloaded specific resource in the child window.

Preferably, the specific resource includes any one or more of a video resource, an audio resource, an image resource, an animation resource, and a text resource.

A computer-readable medium including computer program instructions, when the computer program instructions being executed by a computer unit, instructing the computer unit to:
identify a specific resource related to a web page;
present the identified specific resource in a child window with a browser as a parent window.

According to the embodiments of the present invention, the present invention discloses the following technical effects:

The present invention, after identifying the specific resource related to the web page, breaks the traditional thought process in the industry - directly displaying the specific resource at a location on the web page where the specific resource is embedded. Instead, it flexibly presents the identified specific resource in an independent window, i.e., presenting the specific resource related to the web page without the need to rely on the original web page containing the specific resource. Thus, the user is not limited by the original web page when operating on the specific resource, which provides beneficial technical foundation and premise for the user to perform more operations independently on the specific resource. In other words, it creates an all new way to present resources related to web pages.

Second, different resources can be presented in different ways. For example, when presenting a video resource in an independent window, a user can set-top the independent window at a user level and set or adjust the position and size of the independent window. Thus, the user can browse other web pages while viewing the video resource. Further, when web pages having a same theme contain multiple images, all images from each web page can be presented in the independent window together. Thus, the user can conveniently view all the images without flipping pages. Therefore, the utilization rate of the Internet resources is increased.

In addition, the present invention identifies the web resource by obtaining the attribute information of the resource. Further, by using the method of intercepting a response returned from the server to the browser to obtain the attribute information of the resource, the resource in the web page can be identified more accurately.

Finally, the present invention also provides another web page resource presenting method. This method can present a specific resource in a child window with the browser as the parent window. Even when the original web page containing the resource closes (the browser does not close), the child window can continue presenting the related resource. Thus, the user is not limited by the original web page when operating on the specific resource, which provides beneficial premise for the user to perform more operations independently on the specific resource and to improve user experience when using these specific resources. In other words, it creates an all new way to present resources related to web pages.

### Description of the Drawings

Figure 1 is a flow chart of a method for presenting web page resources provided by the embodiments of the invention;
Figure 2 is an exemplary diagram of a first apparatus for presenting web page resources provided by the embodiments of the invention;
Figure 3 is an exemplary diagram of a second apparatus for presenting web page resources provided by the embodiments of the invention;
Figure 4 is an exemplary diagram of a third apparatus for presenting web page resources provided by the embodiments of the invention;
Figure 5 is an exemplary diagram of a fourth apparatus for presenting web page resources provided by the embodiments of the invention;
Figure 6 is an exemplary diagram of a fifth apparatus for presenting web page resources provided by the embodiments of the invention;
Figure 7 is an exemplary diagram of a sixth apparatus for presenting web page resources provided by the embodiments of the invention;
Figure 8 is a flow chart of another method for presenting web page resources provided by the embodiments of the invention;
Figure 9 is an exemplary diagram of a seventh apparatus for presenting web page resources provided by the embodiments of the invention;

### Detailed Embodiments

To better understand the above-mentioned objectives, features and advantages of the present invention, the followings further provide detailed illustrations of the present invention in combination with the drawings and particular embodiments.

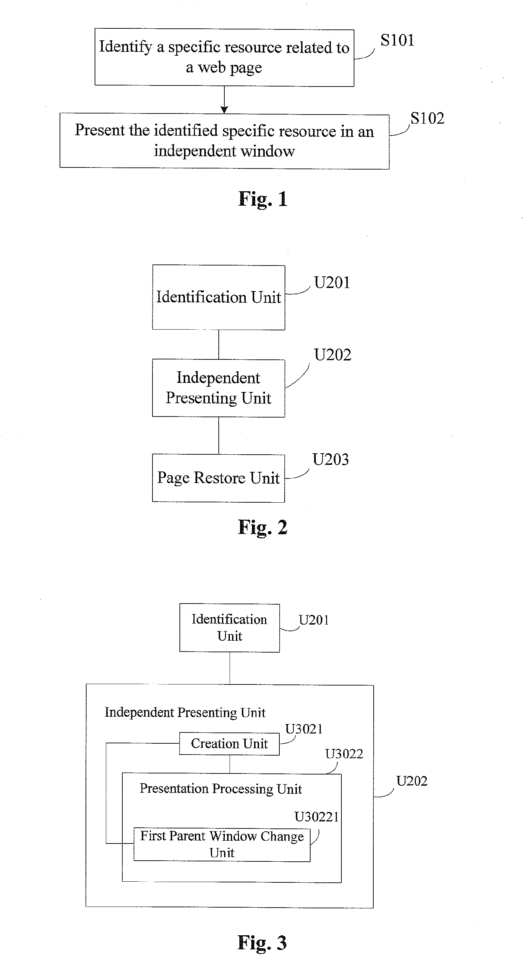

Referring to Figure 1, the embodiments of the present invention provide a web page resource presenting method including the following steps:
S101: identifying a specific resource related to a web page;

Specific resources, as described in the embodiments of the present invention, include single-media resources and/or multi-media resources. The multi-media resources can be interactive multi-media resources. More specifically, such specific resources may include, but not limited to, any one of video resources, audio resources, image resources, animation (including animated GIF or flash animation, etc.), text resources, and any combinations thereof. Of course, the specific resources can also be certain resources created in the future that are related to a web page. Among them, the video resources may be different from the animation resources in that the video resources mainly refer to streaming media files played in players embedded in the web pages, while the animation resources are similar to image resources, such as certain flash ads, etc., in the web page. Further, for video resources and audio resources, the term "present," as used in the embodiments of the present invention, mainly refers to play these resources in an independent window; for image resources, animation resources and text resources, the term "present," as used in the embodiments of the present invention, mainly refers to display these resources in the independent window. Embodiments of the present invention can identify the existence of a variety of specific resources. For example, identifiable audio resources can include web page background music, music played through a player embedded in a web page, and music hyperlinks in a web page, etc.

While identifying a resource, attribute information of the resource may be first obtained, and such attribute information may include a type of the resource, etc. Then, the type information of the resource may be used for identification. More specifically, various ways may be used to obtain the type information of the resource. For example, when a browser loads a web page, the browser may first send a request to a server for loading a particular web page resource. The request may include uniform resource location information of the resource. The uniform resource location information may be used by the server to find the corresponding resource. In practical applications, the uniform resource location information may include a uniform resource identifier (URI), which may be a uniform resource locator (URL) or a uniform resource name (URN). For the convenience of description, the URL is used as an example in the description of embodiments of the present invention. The suffix of the URL can usually indicate the type of the resource. Thus, by intercepting the request, the suffix of the URL in the request can be analyzed to determine the type of the resource. For example, when the suffix of the URL in a request is 'jpg,' then the type of the resource is identified as an image. Similarly, the video resource, audio resource, image resource, animation resource, image resource and text resource can be determined by using this method. It should be noted that, with respect to audio or video resources to be played by a player embedded in the web page, the request for downloading such resources usually is sent by the embedded player (when making the web page, URLs for the audio or video resources to be played by a player are included, and the player will use the URLs to send request to the server). Further, for image resources, animation resources, and text resources, etc., the browser may directly send the request to the server for downloading these resources.

Preferably, under certain circumstances, the above-mentioned method may not guarantee that a real resource type is correctly identified by intercepting and analyzing the request information. For a certain type of resource, when the browser sends a request to the server, the URL of the resource may be arbitrary. But that normally does not impact operations on the client side. For example, an image resource normally has a suffix of `jug.' However, when the browser loads the image resource, if the suffix of the URL of the image resource is '123' in the request sent out, the client side can still load the resource successfully. Thus, if using the suffix of the URL of the resource in the request to identify the resource, it may be impossible to identify such image resource.

Thus, in preferred embodiments of the present invention, the attribute information of the web page resource can also be obtained by intercepting a response from the server to the browser. After the server receives the request from the browser, the server will send back a response to the browser. The response may include a response header closely followed by data contents (i.e., a binary data stream of the resource file requested by the browser). By analyzing certain parts of the data contents, the type of resource file sent by the server can be determined. For instance, a 'gif' image is characterized by: the first six bytes of the data contents are 'GIF89a,' and an 'Flv' format file is characterized by: the first three bytes of the data contents are 'FLV,' etc. Therefore, the data portion of response returned by the server may be used to accurately identify the type of the resource requested by the browser. Of course, the request information sent by the browser may be used first to identify the type of resource and, if the identification failed, the data portion of the response information may be used to identify the type of the resource.

Thus, in this step, identifying the specific resource related to a web page includes identifying the type of resource and/or the URL of the resource. Identifying the type of the resource can be performed according to the methods mentioned above. For identifying the URL of a particular type, it may also be realized by intercepting the request for downloading the resource sent to the server from the browser. For better understanding, a few explanations are provided: First, the browser may get a resource package before loading the web page. The resource package may contain the URL of the resource to be downloaded. Thus, for a resource such as an image, a text, and a background music, etc., a request can be sent to the server according to the corresponding URL contained in the resource package. Further, because the request includes the URL of the resource, the URL for such resource can be determined by directly intercepting the request. But for an audio or video resource to be played by the player embedded in the web page, the request for downloading the audio or video resource is sent by the embedded player instead. However, the request is also sent based on the URL of the audio or video resource, and the URL of the audio or video resource is also contained in the request, so that the URL of the audio or video resource may also be determined by intercepting the request sent by the embedded player.

To better understand the special case mentioned above, a simple explanation will be given in the following paragraph about the working principle of using the player embedded in the web page to play the audio or video resource. Playing the audio or video resource using the embedded player usually includes two steps: first, the browser downloads the player from the server using the URL of the player; second, the player downloads the audio or video resource according to the URL of the audio or video from the corresponding server. Explanation on how the URL for the player and the URL for the video or audio resource are obtained is given below. In order to use the player embedded in the web page to play the specific audio or video, the resource package obtained by the browser before loading the web page includes the URL of the player, and parameters of the audio or video, such as the ID and source, etc., (it should be noted that the resource package does include the URL of the player, but not the URL of the audio or video). The browser downloads the player from the server based on the URL of the player, and provides the player with the required parameters such as ID and source, etc., of the audio or video. The player may then use these parameters to compose the URL of the audio or video. Then, the player can use the composed URL of the audio or video to send the request to a corresponding server to download the audio or video.

S102: Presenting the identified specific resource in an independent window.

It should be noted that an independent window, as mentioned in the embodiments of the present invention, refers to a window with the desktop as the parent window, or a dialog-box form floating window (e.g., a floating toolbar window of some applications can be dragged anywhere on the desktop in a unlocked mode), or a desktop window, etc. In other words, in general, closing other windows (such as other web page windows or even the browser window) does not affect the independent window. Such technical effects can be achieved according to the embodiments of the present invention. Of course, based on real circumstances, if certain means is required to affect the closing of the independent window, it can also be done. For example, when the main program exits, the main program may notify all windows associated with the main program (including any independent window) to close. Under this requirement, although this special way of the exit of the main program will cause the independent window to close, other ordinary ways (for example, closing other web page windows) will not affect closing of the independent window. In other words, by the embodiments of the present invention, the independent window presenting the identified specific resource will not be impacted by the closure of other particular windows (can be a part of the windows or all of the windows)

Further, when presenting the specific resource in an independent window, based on real circumstances, contents presented in the independent window are not limited as the specific resource itself (for example, certain contents may be presented in areas surrounding the specific resource, etc.). But the contents may also be limited to the specific resource itself and do not include any other additional contents. For example, when a video resource from the web page is being played in an independent window, the user can only see the video in the independent window (i.e., limited to the contents of the piece of video), unlike when playing using the player embedded in the web page, images surrounding the player and other contents may also be seen.

Presenting the identified specific resource in the independent window can be realized using various methods, as separately described in detail as follows:

Method one: using this method, an independent window may be created first (for example, a window with desktop window as the parent window or a dialog-box type window), then the identified web page resource may be presented in the created independent window. The independent window may be created after identifying the specific resources related to the web page. After the independent window is created, the specific resource may be presented in the independent window. There are also several ways on how to present the identified specific resource in the independent window, as described below.
1) The parent window of the original web page window containing the specific resource may be modified into the independent window and, if it is necessary, the relative position and/or window size between the original web page window and the independent window may be adjusted (equivalent to a web page reorganization) to allow the identified specific resource to be presented in the created independent window. Of course, here does not exclude the special situation where no adjustment needs to be done on the relative position of the windows or the size of the windows, while the specific resource can be presented in the independent window just right.

More specifically, before the modification, when the parent window of the original web page window containing the specific resource is initially a browser window, the parent window of the original web page window may be changed to the independent window by using certain functions from the operating system (such as a 'set parent' function). Thus, the contents of the original web page containing the specific resource can be shown in the independent window. Of course, to present only the specific resource, the size of the independent window may be relatively small. It may be desired to move the original web page window according to the location of the identified resource such that the identified specific resource is presented in the independent window. In addition, the size of the independent window may not match the display size of the specific resource. In such a case, the size of the independent window may be adjusted to match the display size of the identified resource.

Further, to determine where to move the original web page window, front-end page elements may be analyzed in advance in order to determine the coordinates of a starting point and an end point of the specific resource in the original web page.

It should be noted that, because the original web page window is now a child window of the created independent window, moving the original web page window does not change the position of the independent window. Therefore, the relative positions between the independent window and the original web page window may be changed such that the specific resource can be moved to the independent window to be presented. However, because the created independent window is the parent window of the original web page window, moving the independent window may cause the original web page window to move together with the independent window, and the relative positions between the independent window and the original web page window do not change. Therefore, in general, the independent window is not moved to move the specific resource to the independent window to be presented. Of course, there may be special cases exist. In short, no matter which method is used to move which window, it may be acceptable as long as the specific resource can be presented in the independent window.

When method (1) is used, at the user display level, it is equivalent to that the original web page containing the specific resource disappeared. For example, when a video resource is presented, the user may see only the video resource in the independent window, and cannot see any other contents surrounding the video resource in the original web page window. Further, for a multiple-tag browser, the browser will no longer have the tab for the original web page. Thus, when the independent window is closed, the original web page window is also closed along with the independent window.
2) When the specific resource is of a window type (such as a flash or audio and video played in an embedded player), the parent window of the specific resource window may be directly modified from the original web page window to the independent window, so that the identified resource may be presented in the created independent window.

More specifically, before the modification, the parent window of the specific resource window is the window of the original web page containing the specific resource (the specific resource window has the original web page window as the parent window). Because the identified resource itself is presented in a window form, the parent window of the specific resource window may be directly modified to the independent window, and the specific resource can be presented in the independent window.

For example, with respect to the audio and/or video resource played in the player embedded in the browser, such audio and/or video resource is a window-type resource, and the specific resource window is the player window. When playing the audio and/or video resource directly from the web page, the parent window of the player window is the window of the original web page containing the player. Thus, to present the audio and/or video resource of the player in the independent window, the parent window of the player window can be changed from the original web page window to the created independent window, so that the audio and/or video resource can be played in the independent window.

When method (2) is used, it is equivalent to that the specific resource in the original web page is moved to the independent window to be played. Further, at the user display level, it is equivalent to that the resource presented in the independent window disappeared from the original web page. Of course, the original web page window is not closed and, for a multiple-tag browser, the browser may still have the tab of the original web page and the other contents of the original web page window may also remain displayed in the original web page. Further, when the independent window is closed, although the original web page window is not closed, the user cannot see the specific resource presented in the independent window.

In both methods (1) and (2), the specific resource can be presented in the independent window without reloading and, effectively, only the presentation format in the original web page is changed. Thus, even for dynamic specific resources, they can be presented in synchronization with the original web page. For example, when a video is being played in the original web page, the parent window of the player window playing the video can be changed into the independent window, and the video can then continue to be presented in the independent window.

In addition, in both methods (1) and (2), because no reloading is needed, performance of the system may be less affected, and the user can drag the independent window to any location to view the contents presented herein.

Of course, in other embodiments of the present invention, the specific resource can be presented in the independent window after reloading the identified resources, as described below.
3) After the independent window is created, a temporary browser navigation page may be created with the independent window as the parent window. The original web page may be reloaded in the independent window based on the uniform resource location information (e.g., a URL) of the original web page. Further, the sizes and relative positions of the navigation page window and the independent window can also be adjusted such that the identified resource is presented in the independent window. Of course, in certain special cases, the sizes and relative positions of the navigation page window and the independent window do not need to be adjusted while the specific resource can be presented in the independent window.

That is, it is required to reload the original web page containing the specific resource in the created independent window. However, the created independent window is an empty window without navigation functionalities and is thus unable to reload the original web page. Therefore, the temporary browser navigation (e.g.., an IE page) is created with the independent window as the parent window. The temporary browser navigation window may then reload the original web page containing the specific resource. After the reloading, if no further processing is performed, the effects of the display is equivalent to that the browser window is manually reduced first, and a web page is then loaded in the reduced-size browser. Only upper-left corner of the web page may be visible, and scroll bars may appear on right and bottom sides of the web page. Thus, to present the specific resource contained in the independent window, further processing needs to be performed after reloading. Particularly, the navigation page window may be moved according to the coordinates of the specific resource until the specific resource is presented in the independent window. Thus, presenting the specific resource in the independent window can be achieved. Further, the size of the independent window may also be adjusted to match the size of the player window such that the user can only view the video and other resources played in the player in the independent window, and other contents of the original web page may appear automatically hidden.

For example, when a player embedded in a web page is playing a video, the video needs to be presented in an independent window. The independent window can be created and a temporary browser navigation page is also created with the independent window as the patent window. The web page is then reloaded into the independent window, and the temporary browser navigation page is moved based on the coordinates of the video in the original web page. Further, the size of the independent window is also adjusted to match the size of the player. Thus, the contents of the player are now presented in the independent window.

Obviously, when using this method, the URL of the original web page and the coordinates of the specific resource in the original web page need to be obtained in advance. The URL of the original web page can be obtained when determining the corresponding relationship between the specific resource and the web page, the details of which is omitted here, and the coordinates of the specific resource in the original web page may be obtained through analyzing the front-end page elements. Further, moving the created browser navigation page window is similar to that in method (1) and details is also omitted. In addition, the size of the created independent window may be different from the display size of the specific resource. Thus, the size of the created independent window may be adjusted to match the display size of the specific resource.
4) After the temporary browser navigation page is created with the independent window as the parent window, the identified specific resource can be reloaded into the created independent window based on the source code (e.g., HTML code) of the specific resource, so that the identified specific resource is presented in the created independent window.

In other words, because only the specific resource needs to presented when using this method, not all resources in the original web page need to be reloaded, only the specific resource needs to be presented in the independent window is reloaded.

It should be noted that, when using method (4), if the resource to be presented in the independent window is a video resource played in the embedded player, the temporary browser navigation page needs to load the source code of the player. Such source code of the player in the original web page may include the URL of the player together with information about the video resource to be played in the player. The player may compose the URL for the video resource and download and play the video resource.

Of course, when using method (3) or (4), because reloading is required, for certain dynamic resources, presenting the resources in the independent window may not be synchronized with presenting the resources in the original web page. For example, if a video is being played in the original web page window, and when the video is extracted to the independent window to be played, the player needs to be reloaded, and the video is played from the beginning.

Further, when using method (3) or (4), because the created independent window co-exists with the original web page window containing the specific resource, closing the created independent window does not cause the original web page window to close. However, due to frequent requests to the server, the performance of the system may be impacted.

In general, audio, video, or image resources played in a player embedded in the web page can be presented in such created independent window. Particular methods to create the independent window have been realized using existing technologies and are omitted herein.

Method two: a desktop window is created in advance (the desktop window is now an independent window), and the parent window of the original web page window containing the identified specific resource is directly changed from the browser window to the desktop window. Under this circumstance, the specific resource does not need to be reloaded from the server, which is equivalent to changing the format of the presentation in the original web page. More specifically, the original web page window may be re-organized (e.g., hiding other contents except the identified resources in the web page, etc.). Using functions provided by the operating system, the parent window of the re-organized web page window can be changed to the pre-generated desktop window (there is no limit on when to create the desktop window, which can be created upon power-on or later in time, as long as the desktop window is created prior to changing the parent window into the desktop window). Thus, the re-organized web page may be presented in the created independent window (i.e., the desktop window).

If it is desired to present only the contents of the specific resource in the original web page window with the desktop window as the parent window, this can be achieved by adjusting the location and size of a window or windows at a certain layer or layers (in fact the process of adjusting the position and size of the original web page window is a re-organization of the original web page). The followings illustrate such process based on Internet Explorer (IE).

IE control has three layers of windows, and the names of the three windows are, from the outside to inside: the container window Shell Embedding (can be viewed as the outermost-layer window); document object window Shell DocObject View (can be viewed as the middle-layer window); and the browser service window Internet Explorer_Server (the innermost-layer window). Because the three windows have a relative inner/outer relationship (also known as the parent-child relationship), there are some inherent properties when moving the windows relative to one another. For example, when moving an outer window, the inner window or windows move with the outer window. However, when moving an inner window, the outer window or windows do not move with the inner window. The original web page window containing the specific resources normally belongs to Shell Embedding. Thus, Shell DocObject View and Internet Explorer_Server are inner windows with respect to Shell Embedding and, certainly, the Internet Explorer_Server is the inner window of Shell DocObject View. If the parent window of the original web page window is directly changed to the desktop window (the desktop of a computer is also a window, usually called a desktop window), and presenting only the specific resource in the original web page window containing the specific resource (at this time the parent of the window is already the desktop window) can be achieved through adjusting the size of the original web page window on one hand, and on the other hand adjusting the Shell DocObject View or Internet Explorer_Server relative to the position of the original web page window (i.e., Shell Embedding).

More particularly, adjusting the position of Internet Explorer_Server is described for illustrative purposes. Adjusting the Shell DocObject View is done similarly and its description is omitted. First, the size of the outermost-layer window (i.e., the original web page window containing the identified resource) is adjusted to the size of the specific resource. Further, the size of the innermost-layer window (i.e., Internet Explorer_Server) is adjusted such that the window can display the entire area of the specific resource. Then, the position of the innermost-layer window (i.e., Internet Explorer_Server) is moved such that the area of the specific resource and the display area of outermost-layer window (i.e., the original web page window containing the specific resource) have consistent position and size. At that moment, because the innermost-layer window (i.e., Internet Explorer_Server) is a child window, areas outside the specific resource area are blocked. The user may thus only see the contents of the specific resource.

Of course, when a specific resource is a window-type (e.g., flash or audio and video in an embedded player, etc.), the parent window of the specific resource window may be directly changed from the original web page window to the desktop window, so that presenting the specific resource in the independent window can be directly achieved. However, different from changing the parent window of the specific resource window to a newly created independent window according to above-mentioned method two, under the current method, when presenting the specific resource in the independent window, the specific resource window usually lacks an outside frame.

Method three, the independent window may also be a known player. After the specific resource related to the web page is identified, the known player may be started to present the identified specific resource in the independent window. The known player can include any locally installed player by the user. The application program on the client side (e.g., the browser) can choose a proper player based on a type of the identified specific resource, and use the player to download and to present the identified specific resource. Further, the user may also be able to select a preferred player to perform the download and the presentation.

In addition, if the user did not locally install a player, or in order not to require any user operation, a built-in player (e.g., a flash player, etc.) in the browser can be started. The built-in player may then download the identified specific resource, so as to present the identified specific resource in the independent window. Such approach may be desired for a specific resource without a corresponding embedded player in the web page, such as web page background music and other similar audio or video resources. It should be noted that, because the locally-installed player and the browser's built-in player all use the desktop window as the parent window, these players are independent windows and such presentations are also called presenting the identified specific resource in an independent window. To facilitate the description, the created independent window and the known player are all called independent windows in sections below. Unless stated specifically, the independent window refers to a created independent window or a known player.

It should also be noted that, when the known player (including a locally installed player or a browser's built-in player) obtains the URL of the resource, the known player can automatically send a request to the server for downloading the resource based on the URL of the resource, and further plays the corresponding resource. Under this approach, identifying the specific resource related to the web page more specifically includes identifying the URL of the specific resource, and providing the identified URL of the specific resource to the know player. Thus, the player can send the request to the server for downloading the specific resource based on the URL, and can also present the specific resource in the independent window of the known player after receiving the specific resource. In other words, as described in embodiments of the present invention, starting the known player includes opening the known player and providing the URL of the identified resource to the player two steps.

Of course, when the specific resource is presented using the independent window, the original web page containing the specific resource may disappear, or the specific resource may disappear from the original web page. The independent window presenting the specific resource can be restored to the original web page state through a configured page restore entry. The specific resource is returned to the fixed location within the original web page, the same as what exists prior to being presented in the independent window.

Further, the specific resource related to the web page may include any specific resource contained in the web page (such as a picture, a text resource, a background music, etc., in the web page); and/or, any specific resource in a sub-page of the current web page (for example, some pages on the Mop main web page are sub-pages of the Mop main web page); any specific resources in web pages related to the current web page, and any specific resource backend-transferred in the web page (for example, the audio, video and other resources played by a player embedded in the web page are backend transferred in the web page), and so on. Further, the web page related to the current web page may include a web page pointed to by a hyperlink in the current web page, or have a same theme as the current web page (for example, in the BBS system, due to a large number of posts, several web pages may have the same theme).

Thus, the embodiments of the present invention not only can present the resource contained in the web page in the independent window, but also can present the resources of the sub-pages and related web pages of the current web page in the independent window. This enables the user to present the resources of those related web pages without opening them and, thus, brings all new experience to the user.

Further, the specific resource related to the web page can be identified by an application program running on the client side, for example, an application program from the operating system running on the client side. Such application program can be the browser or a module used by the browser. Using the web browser as an example, the web browser can directly identify the specific resource related to the web page, and present the identified specific resource in an independent window, without the need to install other plug-ins or to rely on other means.

After the specific resource is identified, a prompt indicating such specific resource contained in the current web page can be displayed in the window where the web page containing the specific resource is located, so as to prompt the user which web page contains which specific resource. If needed, more information, such as resource name, size, and even downloading address, can be displayed. The prompt may be displayed as a prompt icon, and can be displayed at various browsing locations, such as the browser's address bar, tab bar or close to the resource, tool bar, and side bar. If the currently-opened web page is presenting or contains the specific resource, the prompt can be shown in any one or more of the above-mentioned locations. However, if the web page containing the specific resource is minimized or another window is currently being displayed, the user can only see the tab bar corresponding to the web page containing the specific resource, and the prompt indicating the specific resource in the web page can still be given on the tab bar. When the web page contains more than one specific resources, the prompt may be displayed using a list or a drop-down list. Further, in order to prompt in an area near the location of the resource, the front-end page elements can be analyzed to obtain the coordinates of the specific resource in the web page, and the prompt can then be displayed near the location of the resource based on the coordinates.

In addition to prompting for each web page, information on the specific resources of several web pages may be combined. For example, if there are five currently-opened web pages, each having a video resource (i.e., the specific resource), these video resources may be prompted at locations such as the tool bar, etc., using a drop-down list. Or, if a web page has multiple specific resources, they can also be combined to be prompted. For example, in the web page currently opened by the user, if five video resources are identified, the prompt indicating the five videos in the web page can be displayed at a certain location of the web page or at locations such as the tool bar of the browser using a drop-down list.

In summary, the prompt for the specific resources is mainly for the user to quickly find relevant specific resources.

In practical applications, presenting the identified specific resource in an independent window can be in an active display mode or a passive display mode. In the active display mode, active display rules may be pre-configured. When one or more preset active display rules are satisfied, the identified specific resource is automatically presented to the user in the independent window. Active display rules may be set based on specific requirements. For example, an active display rule may be set to "actively presenting any resources identified," "actively presenting if only one window is currently opened," or "actively presenting if the identified resource meets a preconfigured condition," etc. Such active display mode may be desired for playing advertising pages.

In the passive display mode, an entry interface for presenting the resources may be provided in advance. The entry interface may be provided to the user, and the user can then request which resource to present through the entry interface. In this mode, after the specific resources in the web page are identified, the identified resources are not immediately presented in the independent window, but are usually notified to the user by the prompt or the resource presentation entry interface, etc., with the option of presenting them in the independent window for the user to choose. Only after receiving through the resource presentation entry interface the presentation request from the user, the resource requested by the user is presented in the independent window. The resource presentation entry interface may be provided separately on the web page. Using a video resource as an example, the resource presentation entry interface may be displayed in the video display area of the web page. Also, the prompt icon may be directly used as the resource presentation entry interface. That is, the user can click on a particular prompt icon on the web page to activate the presentation of certain specific resource(s) in the independent window.

Particularly, when a specific resource is presented in an independent window, the specific resource presented in the independent window can be zoomed in or out, or its position may be changed. For example, the initial size and location of the independent window may be the same as those of the original web page. If the size of the independent window is overly large or the independent window appears in the middle of the display screen, it may be difficult for the user to see other web pages. Thus, the size of the independent window may be reduced by changing the size and coordinates of the independent window, and the independent window may also be moved to the upper-left corner of the display screen. In addition, the specific resource being presented in the independent window can be set-top at the user display level. For example, when certain video resource or image is presented in the independent window, and after the independent window is set-top at the user display level, the independent window can always be displayed at the highest user display level and will not disappear due to switching to other windows by the user. Thus, the user may be able to browse other web pages while watching the video or image in the independent window. At the same time, the user may also perform the above operations independently. For example, when needed, the user can adjust the position of the independent window, and perform operations such as zooming and setting-top, etc., on the independent window, which may provide the user with a substantial amount of convenience. Further, certain functions (e.g., Set Window Pos) from the operating system can be used to set the independent window to the top.

As can be seen through the above embodiments, when the identified specific resource is presented in the independent window, the original web page containing the specific resource may co-exist with the independent window presenting the specific resource. For example, a Youku main page has a video, and after identifying the video resource, the video is presented in the independent window. However, at the same time, the original Youku main page still exists.

Of course, when presenting the identified specific resource in the independent window, the original web page containing the specific resource may also be hidden. This may be mainly used when video resources are presented in the independent window, where the video resource is presented directly using the player of the original web page, and the other parts of the original web page are hidden (i.e., configured to not display). In order to determine which parts of the web page to display or which parts of the web page not to display, the position of the player in the original web page needs to be determined. Similarly, the front-end page elements may be analyzed in advance to determine coordinates of the starting point and the end point of the player in the original web page, and other parts outside the player are hidden based on the coordinates. At the same time, to facilitate the user to check other resources in the original web page at any time, a web page restore entry interface may be provided to restore the original web page display mode. When receiving a request to restore the web page from the user via the entry interface, the specific resource presented in the independent window is restored back to the original web page display mode. For example, a "restore web page mode" button or the like may be provided in the independent window such that the user can at any time click the button to view the resources in the original web page display mode.

In practical applications, a web page may contain multiple specific resources of the same type (for example, the Todou main page contains multiple video resources, a music web site includes multiple audio resources, and a BBS may include multiple images, etc.). In addition, the user may open multiple web pages at the same time to have multiple specific resources of the same type. Thus, in other embodiments of the present invention, the same type identified specific resources can be sent to the independent window one at a time or in batch to be presented. The specific resources sent to the independent window in batch can be arranged as a list in the independent window. At this moment, the created independent window may provide some buttons for the user to operate independently. For example, after the audio or video resources sent to the independent window in batch, the user can click the buttons, such as 'previous,' 'next' 'pause,' 'delete,' and 'add,' to play the resource in the independent window. With respect to image resources, the user may click the buttons, such as 'previous' and 'next' to check the image resources. In addition, when multiple specific resources exist in the web page, the multiple specific resources may be presented in multiple independent windows. The multiple independent windows may be displayed in layers or one of them may be set-top based on the user's needs.

To bring better use experience for the user, in implementation details, the present invention uses different presentation methods with respect to the characteristics of different types of the specific resources. For example, for animation, audio, and video resources, the speed or progress of the presentation in the independent window can be controlled to be synchronized with the speed or progress of the original web page window. Such synchronization may be desired for video resources. For instance, the user may initially watch a video in the original web page window and become interested in the video, and may further wish to present the video in the independent window. If there is no synchronization control, the video will be played in the independent window from the beginning, which is not the user usually hoped for. However, after the synchronization control, the video will be played from the point the user is currently viewing, as to improve the user experience. Further, some web pages automatically play videos, therefore it is possible that, when the user watches a video, the video has been played for a while. If the user is interested in the video, when selecting to play the video in the independent window, the user may wish to play the video from start. Under such circumstance, playing the video in the independent window does not need to be synchronized with playing the video in the original web page window. Instead, the video is played from the beginning. Thus, the practical applications do not exclude situations where no synchronization is needed. Such un-synchronized situations may also appear in playing audio resources. Because the audio resources do not affect visual experience, playing the audio from the beginning does not impact the user experience. Of course, both ways may be provided to the user and the user can choose flexibly based on the user's own needs.

It should be noted that, synchronized presentation can usually be achieved only through creating the independent window, while un-synchronized presentation can be achieved through either starting the known player or creating the independent window. When creating the independent window, the specific resources can be reloaded into the created independent window and then presented in the independent window. At this point, the created independent window co-exists with the original web page containing the specific resource.

Both the video resource and the audio resource can cause hearing experience for the user. However, when more than one video and/or audio resources are presented at the same time, it may cause hearing interference for the user. For example, if there are ten currently-opened web pages, and five of them may include video resources that are automatically played, it may cause interference for the user. On the other hand, when the video or audio resource is played in the independent window, the original web page containing such video or audio resource may also play the video or audio, which may also cause hearing interference for the user. Thus, when the specific resource being presented in the independent window is a video or audio resource, the video or audio resource in the original web page may be controlled so as to mute, pause, or remove the video or audio resource.

In addition, some audio resources may be included in a web page without a corresponding player, such as web page background music, etc., and the user may be unable to see information about the audio resources. But the user may want to know information about the background music, such as the title and the lyrics, etc. Embodiments of the present invention can obtain such information and provide such information to the user. Thus, when the user is listening the music from the independent window, the user can see the title and lyrics, etc., of the music. There may be many particular ways to obtain such information. For example, the title of the background music may be obtained from the request sent to the server from the browser, and the lyrics of the background music can be searched on the Internet based on the title.

For image resources, if the number of images related to a web page is not large, all images related to the current web page may be displayed at the same time within the same window. Such presentation method is different from the "previous" and "next" method described above. Using this presentation method, it is equivalent to that each image is presented in its own independent window, such that the user can check all images related to the current web page without any operation. The user convenience is further improved.

In addition, for image resources, embodiments of the present invention can also use the following presentation method: buttons such as 'previous' or 'next' may be placed on image attachment in the form of floating bar. When the user clicks on the 'previous' or 'next' button, image positioning techniques may be used to directly locate the image resource and to present the image resource, so as to facilitate the user to quickly locate the image resource, without having to scroll or flip through the web page to check the contents. For example, when the user is browsing images in a BBS post, the post publisher may publish images in several floors and the images may include other images published by followers of the post. Then, a 'next' button may be displayed near the first image, and a click on the button can automatically locate the next image or the web page containing the next image (if multiple web pages showing images with the same theme). For images after the first image, both the 'previous' button and the 'next' button can be displayed nearby, so as to directly locate the previous image as well.

It should be noted that, the various presentation formats in the independent window and the various operations on the original web page window (such as setting-top at the user display level, hiding the original web page or allowing co-existence) can be realized using the functions provided by the operating system.

It is understood through the above descriptions, using independent windows to present specific resources related to web pages allows the user to perform more operations independently, such as changing the position of the independent window, zooming in or out the independent window, and controlling which audio or video to be played. In addition, when certain resources, such as a video resource, are presented in the independent window, because the independent window can be set-top at the user level, the user can browse other web pages while watching the video. When web pages with the same theme contain multiple images, all the images from each web page can be presented together in the independent window, so that the user can conveniently view all the images without clicking the scroll bar or flipping pages. Thus, it is as if the user is guided to use the resources on the Internet more efficiently, which further avoids the possibility of giving up browsing certain resources due to inconvenience and increases the utilization rate of Internet resources.

Those with ordinary skill in the art can understand that all or part of the above methods can be achieved by computer programs instructing corresponding hardware. The computer programs can be stored on a computer readable storage medium. The computer programs, when being executed, include the following steps: identifying a specific resource related to a web page, and presenting the identified specific resource in an independent window. The described storage medium can be, for example, a ROM/RAM, disk, and CD-ROM, etc.

Corresponding to the web page resource presenting method provided in the embodiments of the present invention, a web page resource presenting apparatus is also provided by embodiments of the present invention. Referring to Figure 2, the apparatus includes following units:
an identification unit U201, which is used to identify the specific resource related to the web page;
an independent presenting unit U202, which is used to present the identified specific resource in an independent window.

After identification unit U201 identifies the specific resource related to the web page, independent presenting unit U202 can present the identified specific resource in the independent window. In the embodiments of the present invention, the independent window may include: a desktop window, or a window with the desktop window as the parent window, or a dialog-box form window, etc. In order to facilitate the return to the presentation or display mode of the original page window, the apparatus can also include a page restore unit U203, which is used to receive a user request to restore the original web page. After receiving the request, it triggers the independent presenting unit to restore the original web page display mode from presenting the specific resource in the independent window.

Further, the independent window can be created after the specific resource related to the web page is identified. Referring to Figure 3, independent presenting unit U202 may include:
an creation unit U3021, which is used to create the independent window;
a presentation processing unit U3022, which is used to present the identified specific resource in the created independent window.

More particularly, presentation processing unit U3022 includes:
a first parent window change unit U30221, which is used to modify the parent window of the original web page window containing the specific resource to the independent window, and present the identified specific resource in the created independent window.

Preferably, first parent window change unit U30221 is specifically used to: modify the parent window of the original web page window containing the specific resource into the independent window, adjust the relative position and/or window size between the original web page window and the independent window, and present the identified specific resource in the created independent window.

Preferably, when the independent window is a desktop window, the first parent window change unit is specifically used to: re-organize the original web page by hiding contents of the original web page other than the specific resources, and modify the parent window of the re-organized web page into the desktop window so as to present the identified specific resource in the created independent window.

Or, in another embodiment of the present invention, presentation processing unit U3022 may also include:
a second parent window change unit U30222, which is used to, when the identified specific resource is a window-type, modify the parent window of the identified specific resource window into the independent window, and present the identified specific resource in the created independent window.

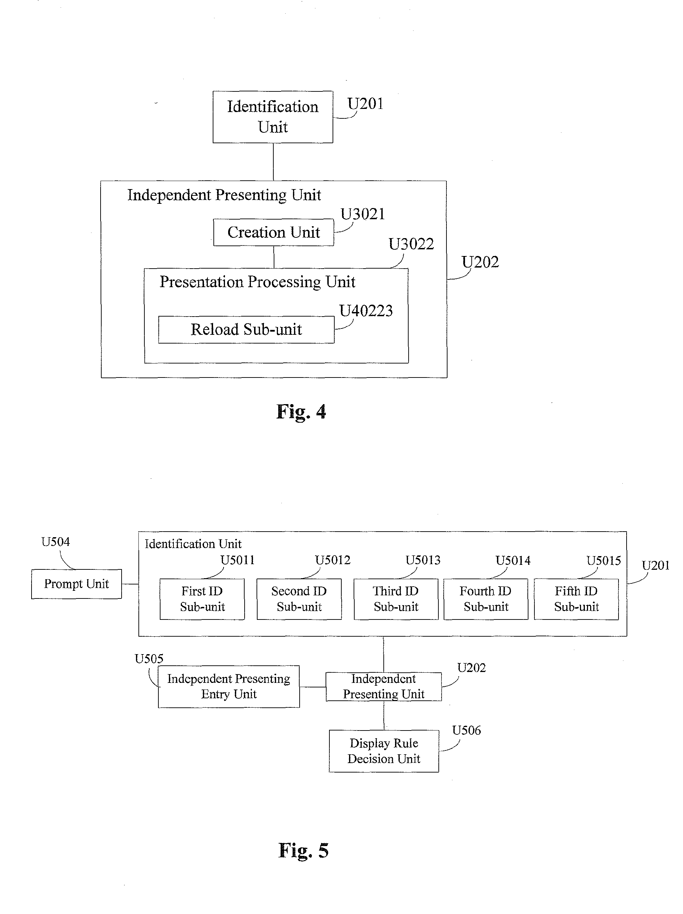

Or, in another embodiment of the present invention, presentation processing unit U3022 can reload the specific resource without hiding the original web page containing the specific resource (the original web page containing the specific resource co-exists with the created independent window), and perform the presentation un-synchronized with the original web page. Referring to Figure 4, presentation processing unit U3022 may also include:

Reload sub-unit U40223, which is used to create a temporary browser navigation window with the independent window as the parent window, to reload the original web page containing the specific resource, and to present the specific resource in the created independent window.

Preferably, reload sub-unit U40223 is specifically used to: create the temporary browser navigation page with the independent window as the parent window, reload the original web page in the independent window based on the uniform resource location information of the original web page, adjust the sizes and relative positions between the navigation page window and the independent window, and present the identified specific resource in the created independent window.

In addition, the independent window can also be a known player. Thus, independent presenting unit U202 can present the identified specific resource in the independent window by starting the known player. Further, independent presenting unit U202 is specifically used to start the known player, and the known player downloads the identified specific resource and presents the identified specific resource. Further, the known player can be a locally-installed player by the user, or the browser's built-in player.

Embodiments of the present invention not only can present the resource contained in the web page in the independent window, but also can present the resources of the sub-pages and related web pages of the current web page in the independent window. Thus, referring to Figure 5, identification unit U201 may include:
first identification sub-unit U5011, which is used to identify the specific resources in the web page;
may also include a second identification sub-unit U5012, which is used to identify the specific resources in the sub-pages of the current web page;
may also include a third identification sub-unit of U5013, which is used to identify the specific resources back-end transferred in the web page, which mainly refers to audio or video resources played in a player embedded in the web page.

In addition, identification unit U201 can identify specific resources in web pages related to the current web page, and thus may further include:
a fourth identification sub-unit U5014, which is used to identify specific resources in a web page pointed to by a hyperlink in the current web page;
a fifth identification sub-unit U5015, which is used to identify specific resources in web pages having a same theme as the current web page.

Further, identification unit U201 can be an application program running on the client side. The application program can be the browser (e.g., a web browser, a local resource browser, or a browser with both web browsing and local resource browsing functionalities), or a module used by the browser.

In practical applications, the apparatus may also include prompt unit U504, which is used to display a prompt indicating such specific resource contained in the current web page in the window where the web page containing the specific resource is located (e.g., a prompt icon, etc.). The prompt may be displayed at various browsing locations, such as the browser's address bar, tab bar or close to the resource, tool bar, and side bar.

When presenting the identified specific resource in the independent window, independent presenting unit U202 can use an active display mode or a passive display mode. In the passive display mode, the presentation in the independent window can be done after receiving the user request, and the prompt icon displayed by prompt unit U504 can be used as an entry interface for presenting the resources. The user can then send the request for presenting the resource by clicking on the prompt icon. The prompt icon is used to receive the user request for presenting the specific resource and, after receiving the user request, may trigger independent presenting unit U202 to present the identified and user-requested specific resource in the independent window. In addition, an independent presenting entry unit U505 may be separately provided in the apparatus, and may be used to similarly receive the user request for presenting the specific resources and, after receiving the user request, may trigger independent presenting unit U202 to present the identified and user-requested specific resource in the independent window.

In the active display mode, presentation can be automatically done based on pre-configured display rules without receiving any user request. The apparatus may also include a display rule decision unit U506, which is used to decide whether a preset resource active display rule is satisfied. If satisfied, display rule decision unit U506 triggers independent presenting unit U202 to present to the user with the identified specific resource in the independent window.

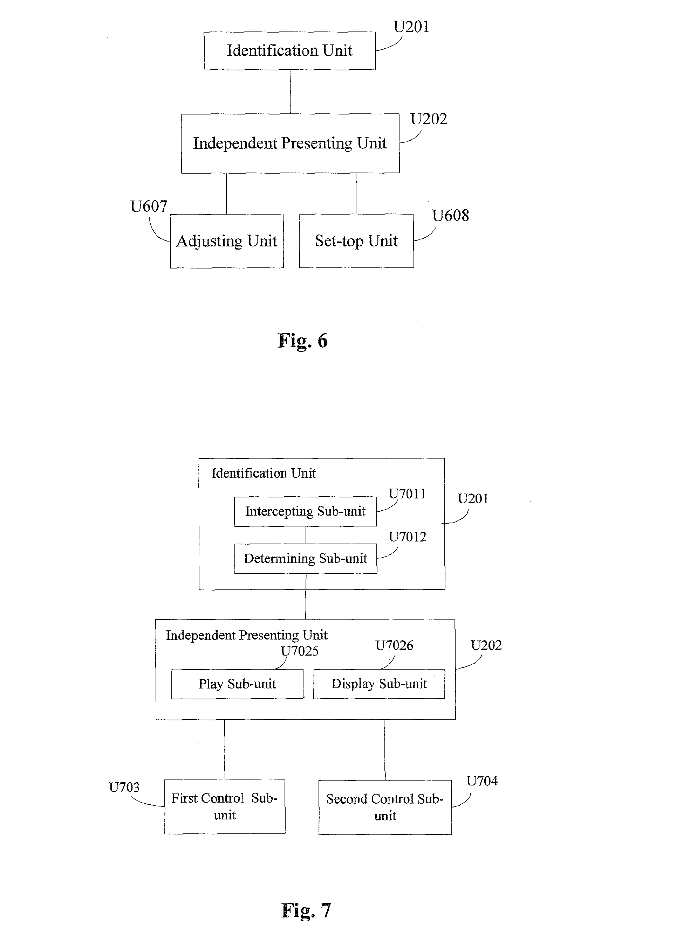

In addition, referring to Figure 6, the apparatus can also include an adjusting unit U607, which is used to adjust the position and size of the independent window, and a set-top unit U608, which is used to set-top the specific resource being presented in the independent window at the user display level. Further, adjusting unit U607 and set-top unit U608 can automatically perform the corresponding operations, or the user can manually perform such operations. Thus, the user can watch video in the independent window while browsing other web pages.

When there are multiple same-type identified specific resources, the same-type resources can be sent to the independent window in batch to be presented. Thus, independent presenting unit U202 can send the identified specific resources of the same type to the independent window in batch to be presented, and can also provide some buttons in the independent window for the user to operate, such as "previous song," "next song," "previous picture," and "next picture," etc., so as to increase the user operability.

As described in the embodiments of the present invention, the specific resource include at least one of a video resource, an audio resource, an image resource, and a text resource. For video and audio resources, to present means to play; for image resources and text resources, to present means to display. Thus, referring to Figure 7, independent presenting unit U202 includes the following sub-units:
a play sub-unit U7025, which is used to play video resources or audio resources in the independent window;
a display sub-unit U7026, which is used to display image resources or test resources in the independent window.

In order to adapt the characteristics of various resources, presentations of different types of resources in the independent window may be performed slightly differently. For example, the apparatus can also include: a first control sub-unit U703, which is used to, when the specific resource being presented in the independent window is a video or audio resource, control the speed or progress of the presentation of the video or audio resource in the independent window to be synchronized with the speed or progress of the playing of the video or audio resource in the original web page. The apparatus can also include a second control sub-unit U704, which is used to, when the specific resource being presented in the independent window is a video or audio resource, control the video resource or the audio resource in the original web page so as to mute, pause, or remove the video or audio resource. Further, when there are not many image resources related to the web page, independent presenting unit U202 is specifically used to display all identified images related to each web page having the same theme in respective independent windows.

Because the specific resource related to the web page is downloaded from a corresponding server, the type of the specific resource can be obtained by intercepting a request for downloading the specific resource sent to the server. In addition, the type of the specific resource can also be obtained by intercepting a response returned from the server. Further, when the type of the resource cannot be obtained from the request information, the response information may be used to obtain the type information of the specific resource. Thus, identification unit U201 can include the following sub-units:
an intercepting sub-unit U7011, which is used to intercept the request information for requesting downloading the specific resource sent to the server and/or the response information returned from the server. The request information includes a URL of the specific resource;
a determining sub-unit U7012, which is used to identify the specific resource related to the web page based on the URL of the resource in the request information and/or a data portion of the response information.

Further, identification unit U201 is specifically used to identify the type of an identified specific resource and/or the URL of the specific resource.

It should be noted that, the web page resource presenting apparatus provided by the embodiments of the present invention can perform steps shown in the web page resource presenting method in above described embodiments, and the details of the operation processes are omitted and may refer to corresponding features in the above described method embodiments.

Above disclosure illustrates an independent-window based web page resource presenting method and apparatus. According to other embodiments of the present invention, other methods may also be used to present the web page related resource, as described below.

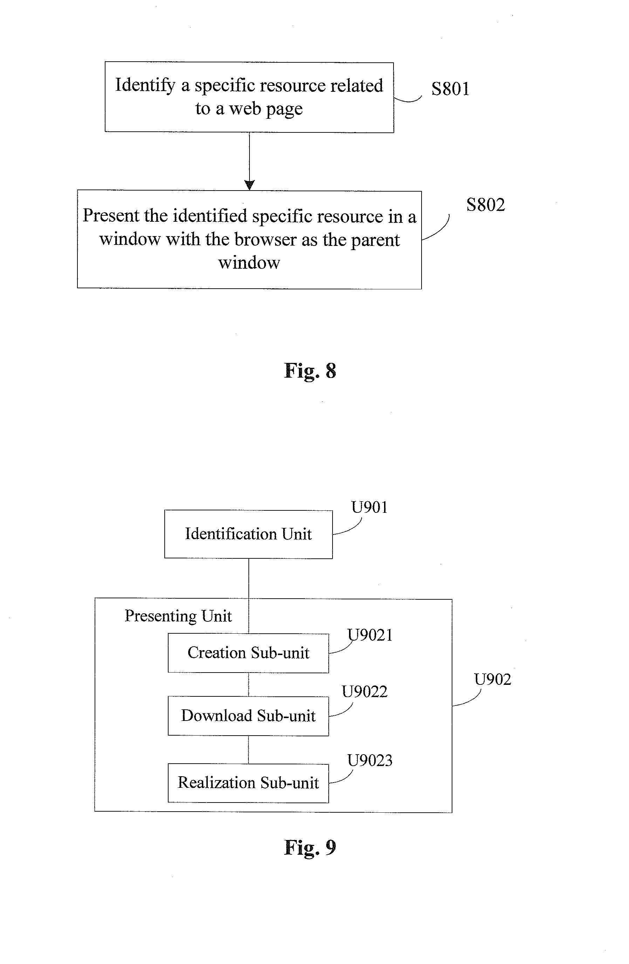

Referring to Figure 8, the method includes the following steps:
S801: identifying a specific resource related to the web page;
S802: presenting the identified specific resource in a window with the browser as the parent window.

Using this method, the identified specific resource is presented in a child window with the browser as the parent window. When presenting the identified specific resource, the specific resources can be first downloaded based on the URL of the identified specific resource, and then be presented in the child window with the browser as the parent window. The child window with the browser as the parent window may be viewed as a cutout window from the original web page window, and is able to send request to the server to download and present the specific resource. For example, for a video resource played by a player embedded in the original web page, the child window with the browser as the parent window may similarly first request the server to download the player of the original web page. The downloaded player may then download the video resource from the server containing the video resource. Thus, the video resource can be presented in the child window with the browser as the parent window. Further, the URL of the identified specific resource can be obtained at the same time as the identification is performed. For example, when identifying the specific resource from the request information sent to the server for downloading the specific resource, the URL of the specific resource can be obtained from the request information.

It should be noted that, this method is different from presenting the resource directly in the web page. For example, when a video resource is played in a player embedded in the web page, although the video resource is presented in a child window, the child window has the original web page containing the specific resource as the parent window. When the original web page window containing the resource is closed, the child window (i.e., the embedded player) is also closed together, and the resource in the player can no longer be presented. However, the child window described in the embodiments of the present invention has the browser as the parent window. That is, after the specific resource related to the web page is identified, the child window is created with the browser as the parent window, and the child window is in parallel with windows of other web pages (in fact, a web page displayed in the browser is a child window of the browser), i.e., the windows at the same level without any child-parent relationship between one another. Thus, when closing other web pages in the browser, the newly created child window is not affected, and the specific resource can continue to be presented in the child window. Only when the browser is closed, the child window will be closed as well.

Similar to the independent-window-based presentation, the web page resources presented in the child window with the browser as the parent window can include, but not limited to, any one of video resources, audio resources, image resources, animations (including animated GIF or flash animation, etc.), text resources, and any combinations thereof. When presenting resources in the child window with the browser as the parent window, after the specific resource related to the web page is identified, a prompt can also be similarly displayed at locations such as near the resource, tool bar, and tab bar. The user can click on the prompt or drag the prompt to realize the presentation of the related resource in the newly created child window with the browser as the parent window.

Further, as described in this method, the specific resources related to a web page usually refer to related resources in the web page, and/or related resources in a sub-page of the current web page, and/or related resources in a web page pointed to by a hyperlink in the current web page, and/or related resources in web pages having the same theme as the current web page, and/or related resources in a back-end window of the current web page.

When presenting resources in the child window with the browser as the parent window, after the related resource is identified, the resource needs to be first reloaded from the server based on the URL of the resource, and then the resource is presented in the child window with the browser as the parent window. Thus, without special processing, this method usually cannot achieve synchronized presentation. However, the advantages of this method includes that, when the original web page containing the resource closes (the browser does not close), the child window can continue presenting the related resource.

Those with ordinary skill in the art can understand that all or part of the above methods can be achieved by computer programs instructing corresponding hardware. The computer programs can be stored on a computer readable storage medium. The computer programs, when being executed, include the following steps: identifying a specific resource related to a web page, and presenting the identified specific resource in a child window with the browser as the parent window. The described storage medium can be, for example, a ROM/RAM, disk, and CD-ROM, etc.

Corresponding to the web page resource presenting method provided in the embodiments of the present invention, a web page resource presenting apparatus is also provided by embodiments of the present invention. Referring to Figure 9, the apparatus includes:
an identification unit U901, which is used to identify a specific resource related to a web page;
a presenting unit U902, which is used to present the identified specific resource in a child window with the browser as the parent window.

Further, presenting unit U902 may include the following sub-units:
a creation sub-unit U9021, which is used to create the child window with the browser as the parent window;
a download sub-unit U9022, which is used to obtain the URL of the identified resource related to the web page, and to download the specific resource based on the URL;
a realization sub-unit U9023, which is used to present the downloaded specific resource in the child window.

The related resource includes any one or any combination of a video resource, an audio resource, an image resource, an animation resource, and a text resource.

It should be noted that, the embodiments of the present invention can be implemented through the browser or through other software and/or hardware.

The systems, apparatus, and methods described in the present invention can be applicable to a variety of network or client terminal environment, such as computer equipment including personal computer equipment and the like, or mobile phones, mobile communications equipment, personal digital assistant (PDA) and other electronic equipment

The above detailed descriptions illustrate a web page resource presenting method and apparatus provided by the present invention. Individual examples are used to illustrate the principle and implementation of the present invention. However, the examples and embodiments are only used to help understanding the methods and spirit of the present invention. Also, for those with ordinary skill in the art, particular implementations and application scope may be changed based on the principles of the present invention. In summary, the contents of this specification should not be interpreted as any limitation to the present invention

## Claims

1. A method for presenting web page resources, comprising:
identifying a specific resource related to a web page;
presenting the identified specific resource in an independent window.

2. The method according to claim 1, wherein presenting the identified specific resource further includes:
creating the independent window; and
presenting the identified specific resource in the created independent window.

3. The method according to claim 2, wherein presenting the identified specific resource in the created independent window further includes:
modifying a parent window of the web page containing the identified specific resource into the independent window, and presenting the identified specific resource in the independent window;
or,
when the identified specific resource is of a window type, modifying a parent window of the specific resource window into the independent window, and presenting the identified specific resource in the independent window;
or,
creating a temporary browser navigation page with the independent window as a parent window, reloading the web page containing the identified specific resource, and presenting the identified web page resource in the independent window.

4. The method according to claim 3, wherein modifying the parent window of the web page containing the identified specific resource into the independent window and presenting the identified specific resource in the independent window further include:
modifying the parent window of the web page containing the identified specific resource into the independent window; adjusting relative positions and/or sizes of the web page and the independent window; and presenting the identified specific resource in the independent window.

5. The method according to claim 3, wherein creating the temporary browser navigation page with the independent window as the parent window, reloading the web page containing the identified specific resource, and presenting the identified web page resource in the independent window further include:
creating the temporary browser navigation page with the independent window as the parent window, reloading the web page containing the identified specific resource according to a URL of the web page, adjusting relative positions and/or sizes of the temporary browser navigation page and the independent window, and presenting the identified specific resource in the independent window.

6. The method according to claim 3, wherein the independent window is a desktop window and modifying the parent window of the web page containing the identified specific resource into the independent window and presenting the identified specific resource in the independent window further include:
re-organizing the web page by hiding contents other than the specific resource in the web page, modifying the parent window of the reorganized web page into the desktop window, and presenting the identified specific resource in the independent window.

7. The method according to claim 1, wherein presenting the identified specific resource in the independent window further includes:
starting a known player, downloading the identified specific resource using the known player, and presenting the identified specific resource.

8. The method according to claim 1, further including:
providing a page restore entry interface and, when a page restore request is received by the page restore entry interface, restoring the presentation of the identified specific resource in the independent window back to an original presentation in the web page.

9. The method according to claim 1, wherein identifying the specific resource related to the web page further includes:
identifying the specific resource in the web page;
and/or,
identifying the specific resource in a sub-page of the web page;
and/or,
identifying the specific resource back-end transferred in the web page;
and/or,
identifying the specific resource in another web page pointed to by a hyperlink in the web page;
and/or,
identifying the specific resource in web pages having the same theme as the web page.

10. The method according to claim 1, wherein the specific resource related to the web page is identified by an application program running on client side.

11. The method according to claim 10, wherein the application program running on client side is a browser or a module used by the browser.

12. The method according to any of claims 1-11, wherein the independent window includes: a desktop window, or, a window with the desktop window as a parent window, or, a dialog-box type window.

13. The method according to any of claims 1-11, further including:
displaying a prompt in a window of the web page containing the specific resource to indicate the specific resource contained in the web page.

14. The method according to claim 13, wherein the prompt includes a resource presenting entry, and presenting the specific resource in the independent window further includes:
when receiving a user request for presenting the specific resource from the resource presenting entry, presenting the identified and user-requested specific resource in the independent window.

15. The method according to any of claims 1-11, further including:
providing a resource presenting entry to a user,
wherein presenting the specific resource in the independent window further includes:
when receiving a user request from the resource presenting entry for presenting the specific resource, presenting the identified and user-requested specific resource in the independent window.

16. The method according to any of claims 1-11, further including:
presetting an active display rule,
wherein presenting the specific resource in the independent window further includes:
when the preset active display rule is satisfied, automatically presenting the identified specific resource in the independent window.

17. The method according to any of claims 1-11, further including:
adjusting a position and/or size of the independent window.

18. The method according to any of claims 1-11, further including:
setting-top the independent window presenting the specific resource at a user display level.

19. The method according to claim 1, wherein the specific resource includes a single-media resource and/or a multi-media resource.

20. The method according to any of claims 1-11, wherein the specific resource includes any one or more of a video resource, an audio resource, an image resource, an animation resource, and a text resource.

21. The method according to any of claims 1-11, wherein:
when the specific resource is a video or audio resource, the presenting is playing;
when the specific resource is an image resource, an animation resource, or a text resource, the presenting is displaying.

22. The method according to any of claims 1-11, wherein content presented in the independent window is limited to the specific resource itself.

23. The method according to any of claims 1-11, further including:
controlling a progress of the independent window presenting the specific resource to be synchronized with a progress of the web page.

24. The method according to any of claims 1-11, wherein the specific resource presented in the independent window includes audio, and the method further includes:
controlling the specific resource in the web page so as to mute or pause the specific resource.

25. The method according to claim 10, wherein the specific resource is an image resource, and presenting the identified specific resource in the independent window further includes:
presenting all image resources in other web pages having a same theme as the web page in the independent window.

26. The method according to any of claims 1-11, wherein identifying the specific resource related to the web page further includes:
intercepting a request sent to a server requesting downloading the specific resource and/or a response returned from the server, the request including uniform resource location information of the specific resource;
identifying the specific resource related to the web page based on the uniform resource location information in the request and/or a data portion of the response.

27. The method according to any of claims 1-11, wherein identifying the specific resource related to the web page further includes:
identifying a type of the specific resource related to the web page, and/or, identifying uniform resource location information of the specific resource related to the web page.

28. A web page resource presenting apparatus, comprising:
an identification unit, which is used to identify a specific resource related to a web page;
an independent presenting unit, which is used to present the identified specific resource in an independent window.

29. The apparatus according to claim 28, wherein the independent presenting unit includes:
a creation sub-unit, which is used to create the independent window;
a presentation processing sub-unit, which is used to present the identified specific resource in the created independent window.

30. The apparatus according to claim 29, wherein the presentation processing unit further includes:
a first parent window change sub-unit, which is used to modify a parent window of the web page containing the identified specific resource into the independent window, and to present the identified specific resource in the independent window;
or,
a second parent window change sub-unit, which is used to, when the identified specific resource is of a window type, modify a parent window of the specific resource window into the independent window, and present the identified specific resource in the independent window;
or,
a reload sub-unit, which is used to create a temporary browser navigation page with the independent window as a parent window, to reload the web page containing the identified specific resource, and to present the identified web page resource in the independent window.

31. The apparatus according to claim 30, wherein the first parent window change sub-unit is further used to: modify the parent window of the web page containing the identified specific resource into the independent window; adjust relative positions and/or sizes of the web page and the independent window; and present the identified specific resource in the independent window.

32. The apparatus according to claim 30, wherein the reload sub-unit is further used to: create the temporary browser navigation page with the independent window as the parent window, reload the web page containing the identified specific resource according to a URL of the web page, adjust relative positions and/or sizes of the temporary browser navigation page and the independent window, and present the identified specific resource in the independent window.

33. The apparatus according to claim 30, wherein the independent window is a desktop window and the first parent window change sub-unit is further used to: re-organize the web page by hiding contents other than the specific resource in the web page, modify a parent window of the reorganized web page into the desktop window, and present the identified specific resource in the independent window.

34. The apparatus according to claim 28, wherein the independent presenting unit is further used to: start a known player, download the identified specific resource using the known player, and present the identified specific resource.

35. The apparatus according to claim 28, further including:
a page restore unit, which is used to receive a user request for restoring the web page and, when receiving the user restore request, to trigger the independent presenting unit to restore the presentation of the identified specific resource in the independent window back to an original presentation in the web page.

36. The apparatus according to claim 28, wherein the identification unit further includes:
a first identification sub-unit, which is used to identify the specific resource in the web page;
and/or,
a second identification sub-unit, which is used to identify the specific resource in a sub-page of the web page;
and/or,
a third identification sub-unit, which is used to identify the specific resource back-end transferred in the web page;
and/or,
a fourth identification sub-unit, which is used to identify the specific resource in another web page pointed to by a hyperlink in the web page;
and/or,
a fifth identification sub-unit, which is used to identify the specific resource in web pages having the same theme as the web page.

37. The apparatus according to claim 28, wherein the identification unit is an application program running on client side.

38. The apparatus according to claim 37, wherein the application program running on client side is a browser or a module used by the browser.

39. The apparatus according to any of claims 28-38, wherein the independent window includes: a desktop window, or, a window with the desktop window as a parent window, or, a dialog-box type window.

40. The apparatus according to any of claims 28-38, further including:
a prompt unit, which is used to display a prompt in a window of the web page containing the specific resource to indicate the specific resource contained in the web page.

41. The apparatus according to claim 40, wherein the prompt:
includes a resource presenting entry and is used to receive a user request for presenting the specific resource; and
after receiving the user request, triggers the independent presenting unit to present the identified and user-requested specific resource in the independent window.

42. The apparatus according to any of claims 28-38, further including:
an independent presenting entry unit, which is used to receive a user request for presenting the specific resource and, after receiving the user request, to trigger the independent presenting unit to present the identified and user-requested specific resource in the independent window.

43. The apparatus according to any of claims 28-38, further including:
a display rule decision unit, which is used to determine whether a preset active display rule is satisfied and, when the preset active display rule is satisfied, to trigger the independent presenting unit to present the identified specific resource in the independent window.

44. The apparatus according to any of claims 28-38, further including:
an adjusting unit, which is used to adjust a position and/or size of the independent window.

45. The apparatus according to any of claims 28-38, further including:
a set-top unit, which is used to set-top the independent window presenting the specific resource at a user display level.

46. The apparatus according to any of claims 28-38, wherein the specific resource includes a single-media resource and/or a multi-media resource.

47. The apparatus according to any of claims 28-38, wherein the specific resource includes any one or more of a video resource, an audio resource, an image resource, an animation resource, and a text resource.

48. The apparatus according to claim 47, wherein the independent presenting unit further includes:
a play sub-unit, which is used to play a video or audio resource in the independent window;
a display sub-unit, which is used to display an image resource, an animation resource, or a text resource in the independent window.

49. The apparatus according to any of claims 28-38, wherein the independent presenting unit presents content limited to the specific resource itself.

50. The apparatus according to any of claims 28-38, further including:
a first control unit, which is used to control a progress of the independent window presenting the specific resource to be synchronized with a progress of the web page.

51. The apparatus according to any of claims 28-38, further including:
a second control unit, which is used to, when the specific resource presented in the independent window includes audio, control the specific resource in the web page so as to mute or pause the specific resource.

52. The apparatus according to claim 36, wherein the specific resource is an image resource, and the independent presenting unit is used to present all image resources in other web pages having a same theme as the web page in the independent window.

53. The apparatus according to any of claims 28-38, wherein the identification unit further includes:
an intercepting sub-unit, which is used to intercept a request sent to a server requesting downloading the specific resource and/or a response returned from the server, the request including uniform resource location information of the specific resource;
a determining sub-unit, which is used to identify the specific resource related to the web page based on the uniform resource location information in the request and/or a data portion of the response.

54. The apparatus according to any of claims 28-38, wherein the identification unit is used to identify a type of the specific resource related to the web page, and/or, to identify uniform resource location information of the specific resource related to the web page.

55. The apparatus according to any of claims 28-38, wherein the apparatus is a browser.

56. A computer-readable medium including computer program instructions, when the computer program instructions being executed by a computer unit, instructing the computer unit to:
identify a specific resource related to a web page;
present the identified specific resource in an independent window.

57. A web page resource presenting method, comprising:
identifying a specific resource related to a web page;
presenting the identified specific resource in a child window with a browser as a parent window.

58. The method according to claim 57, wherein presenting the identified specific resource further includes:
creating the child window with the browser as the parent window;
obtaining uniform resource location information of the specific resource related to the web page; downloading the specific resource based on the uniform resource location information; and presenting the downloaded specific resource in the child window.

59. The method according to claim 57 or 58, wherein the specific resource includes any one or more of a video resource, an audio resource, an image resource, an animation resource, and a text resource.

60. A web page resource presenting apparatus, comprising:
an identification unit, which is used to identify a specific resource related to a web page;
a presenting unit, which is used to present the identified specific resource in a child window with a browser as a parent window.

61. The apparatus according to claim 60, wherein the presenting unit further includes:
a creation sub-unit, which is used to create the child window with the browser as the parent window;
a download sub-unit, which is used to obtain uniform resource location information of the specific resource related to the web page and to download the specific resource based on the uniform resource location information;
a realization sub-unit, which is used to present the downloaded specific resource in the child window.

62. The apparatus according to claim 60, wherein the specific resource includes any one or more of a video resource, an audio resource, an image resource, an animation resource, and a text resource.

63. A computer-readable medium including computer program instructions, when the computer program instructions being executed by a computer unit, instructing the computer unit to:
identify a specific resource related to a web page;
present the identified specific resource in a child window with a browser as a parent window.
